# EUROPÄISCHE PATENTSCHRIFT

(11) **EP 3 222 373 B1**
(45) Veröffentlichungstag und Bekanntmachung des Hinweises auf die Patenterteilung: **09.01.2019**
(21) Anmeldenummer: 17160904.3
(22) Anmeldetag: 14.03.2017
(51) Int. Cl.: B22F 3/105, B22F 3/115, B23K 9/04, B23K 9/23, B23K 9/32, B23K 26/00, B23K 26/122, B23K 26/12, B23K 26/342, B23K 26/70, B29C 64/153, B29C 64/245, B33Y 10/00, B33Y 30/00, B33Y 40/00, B29C 64/25

(54) **VERFAHREN UND ANLAGE ZUR ADDITIVEN FERTIGUNG METALLISCHER FORMKÖRPER**
METHOD AND INSTALLATION FOR ADDITIVE MANUFACTURING OF METALLIC MOULDED BODY
PROCÉDÉ ET INSTALLATION DE FABRICATION ADDITIVE DE CORPS MOULÉS EN MÉTAL

(30) Priorität: 21.03.2016 DE 102016105162
(43) Veröffentlichungstag der Anmeldung: 27.09.2017
(73) Patentinhaber: GEFERTEC GmbH, 12681 Berlin (DE)
(72) Erfinder: Fischer, Georg, 13129 Berlin (DE); Röhrich, Tobias, 03185 Turnow-Preilack (DE); Haschke, Igor, 10437 Berlin (DE)
(74) Vertreter: Kaufmann, Sigfrid

(56) Entgegenhaltungen:
- EP-A1- 1 316 408
- EP-A1- 1 669 143
- EP-A1- 2 992 986
- CN-A- 104 399 978
- US-A1- 2011 165 339

## Beschreibung

Die Erfindung betrifft ein Verfahren und eine Anlage zum Herstellen von metallischen Formkörpern mittels Auftragschweißens unter Verwendung eines Lasers oder eines Lichtbogens, formgebenden Schweißens oder US-Schweißens, bei welchem der schichtweise Aufbau durch Abschmelzen eines blech- oder drahtförmigen Werkstoffes erfolgt, wobei zum Zweck einer erhöhten Aufbaurate des Formkörpers während der Fertigung eine effektive Kühlung des im Aufbau befindlichen Formkörpers ermöglicht wird.
Additiv-generative Fertigungsverfahren nehmen bereits heute eine bedeutende Stellung innerhalb der Fertigungstechnologien ein. Da bei generativen Fertigungsverfahren, wie dem selektiven Laserschmelzen (SLM) oder dem Auftragschweißen, der Werkstoff vor bzw. während des Abscheidens aufgeschmolzen wird, können sehr hohe Prozesstemperaturen auftreten. Dies trifft insbesondere auf die Verwendung metallischer Werkstoffe zu, bei denen die Schmelztemperaturen in der Regel bei etwa 1500°C liegen, wobei z. B. bei Verwendung eines Lichtbogens auch deutlich höhere Temperaturen erreicht werden können. Somit ist der limitierende Faktor in der Fertigungsgeschwindigkeit oftmals die Wärmeabfuhr aus den fertiggestellten Schichten des Formkörpers. Bei unzureichender Kühlung entsteht zum einen eine erhebliche Erwärmung des Gesamtsystems resultierend in veränderten Gefügeeigenschaften der abgeschiedenen Metallschichten und zum anderen tritt eine erhöhte Oxidationsneigung auf, die wiederum die Eigenschaften des generierten Bauteiles, insbesondere in den Randzonen, beeinflussen kann.
Aus dem Stand der Technik ist bekannt, das Bauteil während seiner generativen Fertigung mittels eines Wärmeübertragungsfluids aktiv zu kühlen.
Dies umfasst die Kühlung mit einem starken Gasstrom. Hierzu offenbart beispielsweise DE 10 2013 022 056 A1 eine Vorrichtung zum Schweißen mittels Lichtbogens, die z. B. mit einer Ringdüse einen Kaltgasstrom um den Lichtbogen erzeugt, der denselben auch einschnürt. Nachteilig daran ist, dass Gase eine - z. B. im Vergleich zu Flüssigkeiten - nur geringe Wärmekapazität und damit Kühlvermögen aufweisen, sodass der Gasstrom für eine Kühlwirkung sehr stark sein muss, wobei er die Schutzgaswirkung bei der Schichtabscheidung oder sogar den Lichtbogen selbst stören kann.

Für eine effektivere Kühlung sind somit flüssige Wärmeübertragungsfluide zu bevorzugen, wobei der Formkörper beispielsweise mittels Eintauchens in eine Kühlflüssigkeit, wie in US 2015/0108095 A1 beschrieben, oder mittels eines permanent strömenden Fluids, wie in DE 10 2007 009 273 A1 offenbart, temperiert wird.

Diese Lösungen zur Kühlung besitzen jedoch den Nachteil dass das gesamte Bauteil zum Schluss von Flüssigkeit umschlossen ist. Außerdem weist eine Wärmeabführung mittels einer Flüssigkeit den Nachteil auf, dass eine effektive Kühlung nur bei Temperaturen unterhalb der Verdampfungstemperatur der eingesetzten Flüssigkeit erfolgen kann, wobei auch bereits bei Temperaturen unterhalb der Verdampfungstemperatur das Auftreten von Siedebläschen (Dampfkavitation) an den Seitenwänden des Formkörpers die Wärmeabfuhr signifikant verschlechtern kann.

Auch das aus anderen Verfahren (z. B. der mechanischen Bearbeitung) bekannte Aufspritzen von Flüssigkeiten zur Erzielung einer schnellen Abkühlung weist diese Nachteile auf. Hier kommt nachteilig hinzu, dass den nachfolgenden Schweißprozess störende Rückstände der aufgespritzten Flüssigkeiten auf der Oberfläche verbleiben.

Weiterhin wird vorgeschlagen, mit einer gekühlten (verlorenen oder wiederverwendbaren) Druckplattform zu arbeiten. Hier ist der aufgrund der Kühlung des Bauteils nur von seiner mit der Druckplattform im thermischen Kontakt stehenden Wand bzw. Aufstandsfläche begrenzte Wärmeabtransport, der bei großen Bauteilen über sehr große Distanzen erfolgen muss, ein großer Nachteil.

Aufgabe der Erfindung ist es, ein Verfahren und eine Vorrichtung zur additiv-generativen Fertigung eines metallischen Formkörpers zur Verfügung zu stellen, mittels deren eine effektive Kühlung des schichtweise aufzubauenden Formkörpers, insbesondere oberhalb von 1000°C, möglich und die Temperaturführung in einem weiten Temperaturbereich definiert steuerbar sein soll, sodass eine hohe Aufbaurate ermöglicht wird, d. h. ein Formkörper mit im Vergleich zum Stand der Technik verkürztem Zeitaufwand reproduzierbar hergestellt werden kann.
Die Lösung dieser Aufgabe erfolgt durch ein Verfahren zur additiven Fertigung metallischer Formkörper gemäß dem Anspruch 1 sowie eine Anlage gemäß dem Anspruch 11. Zweckmäßige Weiterbildungen der Erfindung sind Gegenstand der Unteransprüche.
Erfindungsgemäß wird ein additives Fertigungsverfahren zur Herstellung eines metallischen Formkörpers, vorzugsweise aus einem drahtförmigen, an der Drahtspitze, oder aus einem blechförmigen unter Energiezufuhr abzuschmelzenden Werkstoff, bereitgestellt, wobei während der Herstellung eine Temperierung, umfassend die Kühlung mit einem festen, schüttfähigen Kühlmedium, der bereits fertiggestellten Teile des Formkörpers erfolgt. Der blech- oder drahtförmige Werkstoff kann mittels einer Werkstoffzuführeinrichtung der Position, an welcher er abgeschmolzen wird, zugeführt werden. Die Energiezufuhr zum Abschmelzen erfolgt mit einem Lichtbogen oder mit einem Laser.
Das feste, schüttfähige Kühlmedium wird im Folgenden als "Kühlgranulat" bezeichnet, wobei dieses Kühlgranulat aus einzelnen Granulatkörpern besteht.
Die Granulatkörper des Kühlgranulats können alle dieselbe Geometrie und dieselbe Größe aufweisen. Zum Beispiel können Stahlkugeln als Granulatkörper eingesetzt sein. Vorzugsweise werden Granulatkörper mit unterschiedlichen Größen, vornehmlich in einem Bereich von 1 mm bis 10 mm, verwendet.
Die Geometrie der Granulatkörper kann sphäroidisch, z. B. kugelförmig, sein. Bevorzugt werden jedoch Vielflächner, z. B. Oktaeder, eingesetzt, da derartige Granulatkörper sich gegenseitig bzw. die Seitenwände des Formkörpers flächig kontaktieren können und so (aufgrund der größeren Kontaktfläche) einen im Vergleich zu Kugeln höheren Wärmetransport erlauben.

Die Granulatkörper bestehen zumindest an ihrer Oberfläche aus einem Material, welches gegenüber dem Werkstoff des herzustellenden Formkörpers inert ist. Bevorzugt weisen sie außerdem eine hohe Wärmeleitfähigkeit von z. B. mehr als 10 W m⁻¹ K⁻¹ auf.

Um das Kühlgranulat universell während der Fertigung von Formkörpern aus beliebigen Werkstoffen einsetzen zu können, wird das Material, aus dem die Granulatkörper des Kühlgranulats bestehen, in der Regel unterschiedlich zu dem Werkstoff des zu fertigenden Formkörpers sein.

Gemäß der Erfindung kann für die Temperierung, insbesondere die Kühlung, das Kühlgranulat in Verbindung mit einem flüssigen, fließfähigen oder gasförmigen Wärmeübertragungsfluid verwendet werden, wobei das Wärmeübertragungsfluid vorzugsweise wenig korrosiv und schwer entzündlich ist. Beispielsweise kann ein Schutzgas, ein Prozessgas oder eine kryogene Flüssigkeit (d. h. ein bei einer Temperatur unterhalb von -150°C verflüssigtes Gas) verwendet werden. Es kann jedoch auch vorgesehen sein, ein Gel, ein fließfähiges festes Kühlmittel, z. B. Kohlendioxidschnee, oder ein Aerosol als Wärmeübertragungsfluid einzusetzen.

Im Folgenden werden alle Arten von Gas, welche geeignet sind, die Oxidation von schmelzflüssigem Metall zu verhindern (beispielsweise ein Edelgas wie Argon, ein Prozessgas wie Kohlendioxid oder ein Inertgas wie Stickstoff) als "Schutzgas" bezeichnet.

Unter dem nachfolgend verwendeten Begriff "Fertigungsebene" ist diejenige Schicht des im (schichtweisen) Aufbau befindlichen Formkörpers zu verstehen, die gerade bearbeitet bzw. aufgebaut wird, d. h. in die unmittelbar der Wärmeeintrag durch die Energiezufuhr zum Aufschmelzen bzw. den schmelzflüssig aufgebrachten Werkstoff erfolgt.

Nach Maßgabe der Erfindung werden also in einen Bauraum, in welchem der Formkörper hergestellt wird, das Kühlgranulat eingefüllt und gegebenenfalls das Wärmeübertragungsfluid eingeleitet. Hierbei wird der Bauraum nur teilweise mit Kühlgranulat gefüllt, wobei der obere Bereich des Formkörpers, d. h. die Fertigungsebene, aus der Kühlgranulatschüttung herausragt.

Vorzugsweise wird die Höhe der Kühlgranulatschüttung auf wenige Millimeter (z. B. etwa 10 mm) unterhalb der Fertigungsebene eingestellt, wobei sie jedoch bevorzugt mindestens 50% der Höhe des bereits aufgebauten Formkörperteils beträgt.

Mit dem sukzessiven Aufbau des Formkörpers wird sodann weiteres Kühlgranulat zugeschüttet, d. h. die bereits aufgebauten Teile des Formkörpers werden von dem Kühlgranulat umschlossen. Gemäß der Erfindung bleibt somit der Abstand in lotrechter Richtung zwischen Oberkante der Kühlgranulatschüttung und Fertigungsebene während der Fertigung weitestgehend konstant.

Der Vorteil der Kühlung unter Verwendung von Kühlgranulat ist die aufgrund der hohen Wärmeleitfähigkeit des Kühlgranulats beschleunigte Wärmeabfuhr aus dem Formkörper, d. h., die pro Zeiteinheit aus dem Formkörper abführbare Wärmemenge kann gegenüber Kühlung mit Gas um wenigstens zwei Größenordnungen gesteigert werden. Hierbei bleibt das Kühlgranulat auch bei Prozesstemperaturen weit über 1000°C voll "funktionsfähig", d. h., seine Kühlleistung ist nicht, wie z. B. aufgrund von Dampfkavitation bei flüssigen Kühlmitteln, eingeschränkt.

Gemäß einer Ausgestaltung der Erfindung bestehen die Granulatkörper aus wenigstens zwei unterschiedlichen Materialien, wobei ein Kern aus einem Material mit einer hohen spezifischen Wärmekapazität von z. B. mehr als 2 kJ·kg⁻¹·K⁻¹ von einer Ummantelung aus einem Material mit einer hohen Wärmeleitfähigkeit von bevorzugt mehr als 10 W m⁻¹K⁻¹ umhüllt ist.

Die Ummantelung kann weiterhin mit einem Material beschichtet sein, welches inert ist gegenüber dem Werkstoff des Formkörpers und dem Wärmeübertragungsfluid, welches die Granulatkörper umgibt. Weiterhin kann das Beschichtungsmaterial elastisch verformbar sein und einen geringen Reibkoeffizienten aufweisen.

In einer weiteren Ausgestaltung werden Granulatkörper mit einem Kern aus einem Phasenwechselmaterial (d. h. einem Material, das seinen Phasenzustand bei einer materialspezifischen Phasenübergangstemperatur unter Aufnahme bzw. Abgabe von latenter Wärme ändert) verwendet, wobei das Phasenwechselmaterial eine Phasenübergangstemperatur aufweist, die kleiner oder gleich der während der additiven Fertigung einzuhaltenden Bearbeitungstemperatur ist.

Weiterhin kann vorgesehen sein, dass das Wärmeübertragungsfluid mit dem Kühlgranulat während der additiven Fertigung in vorgegebenen (periodischen oder aperiodischen) Zeitabständen oder fortwährend ausgetauscht wird. Dies ist insbesondere bei Verwendung von Granulatkörpern mit einem Phasenwechselmaterial von Vorteil, da das Phasenwechselmaterial nach Entnahme der Granulatkörper aus dem für die Fertigung verwendeten Bauraum regeneriert werden kann, d. h. das Phasenwechselmaterial mittels Kühlung seinen Phasenzustand unter Abgabe der im Bauraum aufgenommenen Wärmemenge wieder ändert.

Ferner kann die Erfindung derart ausgestaltet sein, dass das Kühlgranulat weitestgehend unbewegt den Formkörper (zumindest teilweise) umgibt, während das (flüssige oder gasförmige) Wärmeübertragungsfluid durch das Kühlgranulat strömt und hierbei die durch das Kühlgranulat vom Formkörper abgeführte Wärme aufnimmt und aus dem Bauraum abführt.

Gemäß einer weiteren Ausgestaltung wird fließfähiges Wärmeübertragungsfluid auf das Kühlgranulat gesprüht bzw. das Kühlgranulat mit dem Wärmeübertragungsfluid berieselt, wobei das Wärmeübertragungsfluid unter Aufnahme von latenter Wärme verdampft bzw. sublimiert. Das entstandene Gas wird sodann abgeführt und kann ggf. durch Kühlung wieder verflüssigt bzw. verfestigt werden.

Auch kann vorgesehen sein, Kühlgranulat aus wenigstens zwei unterschiedlichen Materialien zu verwenden, wovon ein Material ein mit dem Ausgangswerkstoff des Formkörpers reagierender Zusatz- bzw. Schweißhilfsstoff, zum Beispiel Kohlenstoff, ist, sodass eine Oberflächenbeeinflussung des herzustellenden Formkörpers ermöglicht ist.

Die Erfindung ist anwendbar auf Auftragschweißen unter Verwendung eines Lasers oder eines Lichtbogens, formgebendes Schweißen, US-Schweißen, mittels der einzelne Schichten durch Abscheiden schmelzflüssiger Werkstoffe erzeugt werden können, wobei das schichtweise Aufbauen aus einem metallischen Werkstoff nicht auf diese Arten des additiven Fertigens eingeschränkt ist.
Zur Durchführung des Verfahrens wird eine Anlage zur additiven Fertigung, im Folgenden Fertigungsanlage genannt, verwendet, die einen Bauraum und eine Werkstoffzuführeinrichtung zur Zuführung eines Schweißdrahtes oder eines blechförmigen Ausgangswerkstoffes umfasst.

Der Bauraum ist wannen- oder kastenförmigen, wobei er nach oben hin offen oder auch vollständig abgeschlossenen (d. h., der Bauraum ist gegen die Umgebung abgedichtet) sein kann. Weiterhin kann vorgesehen sein, dass in dem Bauraum eine Schutzgasatmosphäre herrscht.
Die Fertigungsanlage umfasst weiterhin eine in dem Bauraum angeordnete Druckplattform, auf welcher der Formkörper aufgebaut wird, wobei vorgesehen sein kann, dass die Druckplattform nach Fertigstellung jeweils einer Schicht um die Höhe dieser Schicht in vertikaler Richtung nach unten bewegt wird. Es kann auch vorgesehen sein, dass die Werkstoffzuführeinrichtung der Fertigungsanlage entsprechend des schichtweisen Wachsens des Formkörpers in der Höhe nachgeführt wird, während die Druckplattform unbewegt ist.
Erfindungsgemäß werden in den Bauraum, in welchem der Formkörper hergestellt wird, das Kühlgranulat und das Wärmeübertragungsfluid eingeleitet. Um das Kühlgranulat mit dem sukzessiven Aufbau des Formkörpers jeweils hinzuschütten zu können, weist die Fertigungsanlage eine steuerbare Kühlgranulat-Zuführung und einen mit dieser verbundenen Kühlgranulat-Vorratsbehälter auf.

Die Fertigungsanlage umfasst weiterhin eine vorzugsweise mit der Bodenplatte des Bauraumes verbundene Rüttelvorrichtung, mittels welcher der gesamte Bauraum oder nur dessen Bodenplatte in Vibration versetzbar ist. Somit kann durch permanentes oder in periodischen Abständen durchgeführtes Rütteln die Kühlgranulatschüttung kompaktiert werden, d. h. die Kontaktbereiche zwischen den einzelnen Granulatkörpern vergrößert werden.
Zur Entkoppelung eines zu fertigenden Formkörpers von der Rüttelvorrichtung ist zumindest die Druckplattform mittels eines oder mehrerer Entkopplungs-Elemente von der Bodenplatte des Bauraumes vibrationstechnisch abgehängt. Um das (flüssige oder gasförmige) Wärmeübertragungsfluid durch den Bauraum strömen zu lassen, können die Wandungen des Bauraums Wärmeübertragungsfluid-Eintrittsöffnungen, durch welche das Wärmeübertragungsfluid in den Bauraum eintritt, und Wärmeübertragungsfluid-Austrittsöffnungen, durch welche das Wärmeübertragungsfluid aus dem Bauraum heraustritt, aufweisen. Es kann aber auch vorgesehen sein, eine oder mehrere Wärmeübertragungsfluid-Zuführleitungen von oben in den (z. B. nach oben offenen Bauraum) einzuführen. An den Eintritts- und Austrittsöffnungen für das Wärmeübertragungsfluid können einzeln ansteuerbare Ventile zum Öffnen bzw. Schließen der Öffnungen vorgesehen sein.
Ebenso können im Bodenbereich des Bauraums Fluid-Austrittsöffnungen eingebracht sein, durch welche das Wärmeübertragungsfluid und/oder bei der Fertigung entstehende Gase oder Schweißrauch abgesaugt werden.
Die Wärmeübertragungsfluid-Eintrittsöffnungen und insbesondere die Austrittsöffnungen können hierbei Filter oder Membranen aufweisen, die nur das Wärmeübertragungsfluid passieren lassen.
Gemäß einer Ausgestaltung können in den Wänden, der Decke und/oder den Boden des Bauraumes eingebrachte Eintrittsöffnungen und Austrittsöffnungen sowohl durchlässig für das Wärmeübertragungsfluid als auch durchlässig für das Kühlgranulat gestaltet sein, sodass sowohl das Wärmeübertragungsfluid durch den Bauraum strömt, als auch das Kühlgranulat (kontinuierlich oder in vorgegebenen Zeitabständen) in den Bauraum einbringbar bzw. aus dem Bauraum herausführbar, d. h. austauschbar, ist.

Der Bauraum kann aber auch nur für das Kühlgranulat vorgesehene Austrittsöffnungen aufweisen, wobei die Fertigungsanlage z. B. eine Kühlgranulat-Abfuhreinrichtung umfasst.

Mittels entsprechender Leitungen kann hierbei ein geschlossener Wärmeübertragungsfluid- und/oder Kühlgranulat-Kreislauf realisiert werden, wobei das Wärmeübertragungsfluid bzw. das Kühlgranulat außerhalb des Bauraums temperiert und/oder gereinigt wird

Weiterhin kann vorgesehen sein, dass im oberen Bereich des Bauraumes eine steuerbare Fluidzuführungseinrichtung mit Wärmeübertragungsfluidleitungen, aufweisend Austrittsöffnungen oder Düsen, durch welche das Wärmeübertragungsfluid (von oben) auf das Kühlgranulat verteilbar ist, angeordnet ist. Hierbei kann durch eine entsprechende Anordnung der Austrittsöffnungen oder Düsen eine Anströmung der Kühlgranulatschüttung durch das Wärmeübertragungsfluid punktuell, partiell oder großflächig durchführbar sein.

Insbesondere kann vorgesehen sein, dass jede der Austrittsöffnungen oder Düsen mittels eines jeweils einzeln ansteuerbaren Ventiles oder Massestromkontrollers regelbar geöffnet oder geschlossen werden kann. So ist es z. B. möglich, nur jeweils aus derjenigen Düse Kühlmittel strömen zu lassen, die aufgrund ihrer Positionierung und Ausrichtung das Wärmeübertragungsfluid auf das Kühlgranulat (und nicht den Formkörper) sprüht.

Die Ansteuerung der Fluidzuführungseinrichtung, d. h. die konkrete Festlegung des mit dem Fluid zu bestrahlenden Oberflächenbereiches sowie der aus den Düsen ausströmende Fluidmassestrom, erfolgt z. B. bahngeneriert, d. h., Fluidmassestrom sowie Form und Position des zu bestrahlenden Oberflächenbereiches werden aufgrund der bei der Fertigung programmierten Bahn des Generierwirkortes innerhalb der lagenweise aufzubauenden Schichten festgelegt.

Es kann auch vorgesehen sein, dass die Fluidzuführungseinrichtung sowohl ein fließfähiges Wärmeübertragungsfluid als auch ein Prozess- oder Schutzgas zuführen kann, wobei während des Betriebes der Fertigungsanlage aus der Fluidzuführungseinrichtung sowohl das Wärmeübertragungsfluid als auch das Gas strömt, d. h., aus einem Teil der Düsen strömt Wärmeübertragungsfluid und aus dem restlichen Teil der Düsen strömt Prozess- oder Schutzgas. Hierfür kann jede der Düsen mit einem jeweils einzeln ansteuerbaren Umschaltventil verbunden sein, wobei die Umschaltventile jeweils mit einer Wärmeübertragungsfluidzufuhrleitung und einer Prozess- bzw. Schutzgaszufuhrleitung verbunden sind. So kann der Formkörper selektiv mit Schutzgas angeströmt werden, während das den Formkörper umgebende Kühlgranulat mit dem Wärmeübertragungsfluid besprüht wird.

Die Erfindung kann weiter derart ausgebildet sein, dass die Fertigungsanlage eine Absaugvorrichtung, z. B. in Form eines Saugrüssels, umfasst, mittels derer das verdampfte oder sublimierte Wärmeübertragungsfluid auffangbar ist, um es beispielsweise (nach Reinigung und/oder Abkühlung) erneut zur Kühlung zu verwenden.

Die Erfindung wird nachfolgend anhand von Ausführungsbeispielen näher erläutert, wobei gleiche oder ähnliche Merkmale mit gleichen Bezugszeichen versehen sind. Dazu zeigen in schematischer Darstellung die
Figur 1: eine erste Ausgestaltungsvariante der Fertigungsanlage; und
Figur 2: eine zweite Ausgestaltungsvariante der Fertigungsanlage.

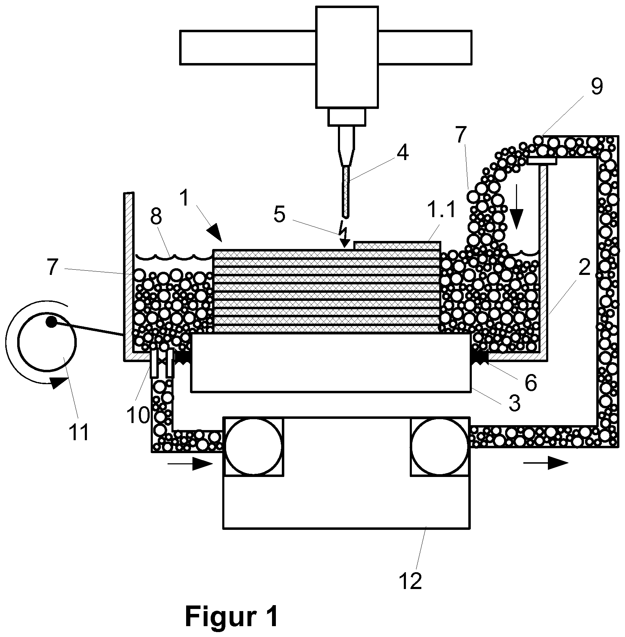

Der Formkörper 1 wird, wie in Figur 1 gezeigt, in dem Bauraum 2 auf der Druckplattform 3 schichtweise aufgebaut, indem von dem Metalldraht 4 mittels des Lichtbogens 5 tröpfchenweise Metall abgeschmolzen und in der Fertigungsebene 1.1 abgeschieden wird.

In den Bauraum 2 ist eine Mischung aus dem Kühlgranulat 7 und dem flüssigen Wärmeübertragungsfluid 8 eingefüllt, wobei die Fertigungsebene 1.1 des Formkörpers 1 aus dem flüssigen Wärmeübertragungsfluid 8 bzw. dem Kühlgranulat 7 herausragt, d. h. unbedeckt bleibt.

Durch die Zuführung 9 wird permanent das flüssige Wärmeübertragungsfluid 8 mit dem Kühlgranulat 7 in den Bauraum 2 eingeführt; durch die Abführung 10 werden beide entnommen und in der steuerbaren Kühlregeleinrichtung 12 mit integriertem Kühlgranulat-Vorratsbehälter (nicht dargestellt) gereinigt, auf eine vorgegebene Temperatur abgekühlt und in der benötigten Menge wieder über die Zuführung 9 in den Bauraum 2 eingeleitet.

Der Bauraum 2 ist außerdem mit der Rütteleinrichtung 11 verbunden, mittels der das über die Zuführung 9 in den Bauraum 2 eingefüllte Kühlgranulat 7 gleichmäßig verteilbar und kompaktierbar ist. Die Entkopplungs-Elemente 6 entkoppeln die Druckplattform 3 von den Vibrationen.

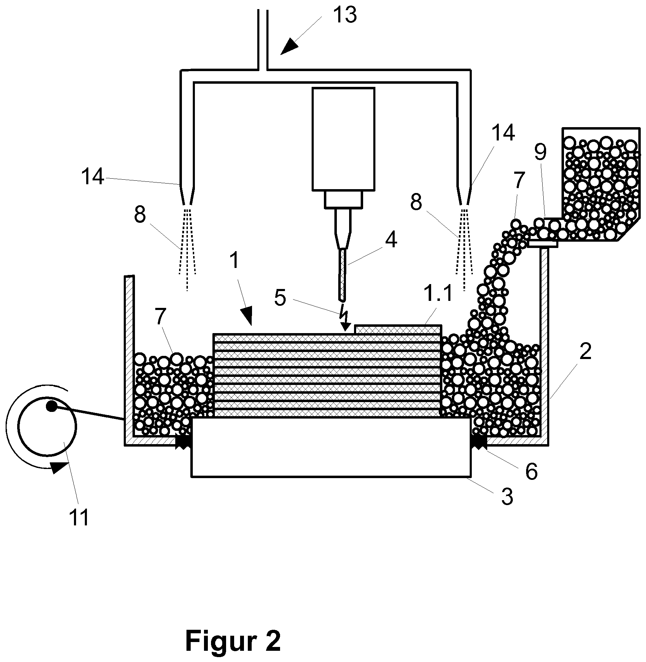

Gemäß der in Figur 2 dargestellten Variante der Fertigungsanlage wird das trockene Kühlgranulat 7 über die Zuführung 9 in den Bauraum 2 eingeführt, wobei die Rütteleinrichtung 11 für eine gleichmäßige Verteilung bei größtmöglicher Packungsdichte sorgt.

Mittels der Wärmeübertragungsfluid-Zuführungseinrichtung 13 wird das flüssige Wärmeübertragungsfluid 8 durch die Düsen 14 gezielt neben den Formkörper 1 auf das Kühlgranulat 7 gesprüht, wobei selbiges unter Verdampfung des Wärmeübertragungsfluids 8 abkühlt.

### Bezugszeichenliste

- 1: Formkörper
- 1.1: Fertigungsebene
- 2: Bauraum
- 3: Druckplattform
- 4: Metalldraht / Ausgangswerkstoff
- 5: Lichtbogen
- 6: Entkopplungs-Element
- 7: Kühlgranulat
- 8: Wärmeübertragungsfluid
- 9: Zuführung
- 10: Abführung
- 11: Rütteleinrichtung
- 12: Kühlregeleinrichtung
- 13: Wärmeübertragungsfluid-Zuführungseinrichtung
- 14: Düse

## Patentansprüche

1. Verfahren zur additiven Fertigung metallischer Formkörper mittels Auftragschweißens unter Verwendung eines Lasers oder eines Lichtbogens, formgebenden Schweißens oder US-Schweißens, wobei in einem Bauraum (2) ein Formkörper (1) durch Aufschmelzen von mindestens einem mittels einer Werkstoffzuführeinrichtung zugeführten blech- oder drahtförmigen Ausgangswerkstoff (4) mittels Energiezufuhr und Abscheiden des schmelzförmigen Ausgangswerkstoffs (4) in einzelnen aufeinanderfolgenden Schichten hergestellt wird,
**dadurch gekennzeichnet, dass**
die während des Abscheidens entstehende Prozesswärme mittels eines die bereits fertiggestellten Teile des Formkörpers (1) zumindest teilweise umschließenden und kontaktierenden, schüttfähigen Kühlgranulats (7) abgeführt wird.

2. Verfahren nach Anspruch 1, **dadurch gekennzeichnet, dass** die von dem Kühlgranulats (7) aufgenommene Prozesswärme mittels eines mit dem Kühlgranulat (7) in thermischer Wechselwirkung stehenden Wärmeübertragungsfluids (8) abgeführt wird.

3. Verfahren nach Anspruch 2, **dadurch gekennzeichnet, dass** das Wärmeübertragungsfluid (8) vor dem Einleiten in den Bauraum (2) temperiert wird.

4. Verfahren nach einem der Ansprüche 2 oder 3, **dadurch gekennzeichnet, dass** das Kühlgranulat (7) während der Fertigung von dem Wärmeübertragungsfluid (8) durchströmt wird.

5. Verfahren nach einem der vorstehenden Ansprüche, **dadurch gekennzeichnet, dass** das im Bauraum (2) befindliche Kühlgranulat (7) kontinuierlich oder in vorgegebenen Zeitabständen ausgetauscht wird.

6. Verfahren nach einem der vorstehenden Ansprüche, **dadurch gekennzeichnet, dass** Kühlgranulat (7) mit Granulatkörpern mit einem Granulatkörperkern aus Phasenwechselmaterial und einer Granulatkörperummantelung aus einem metallischen oder keramischen Werkstoff mit einer Wärmeleitfähigkeit von wenigstens 10 W m⁻¹ K⁻¹ verwendet wird.

7. Verfahren nach einem der Ansprüche 2 bis 6, **dadurch gekennzeichnet, dass** gasförmiges Wärmeübertragungsfluid (8) verwendet wird, wobei dieses im unteren Bereich des Bauraumes (2) in denselben eingeleitet wird und das Kühlgranulat (7) von unten nach oben durchströmt.

8. Verfahren nach einem der vorstehenden Ansprüche 2 bis 6, **dadurch gekennzeichnet, dass** im unteren Bereich des Bauraumes (2) eine Absaugung von durch das Kühlgranulat (7) strömenden Gasen erfolgt.

9. Verfahren nach einem der vorstehenden Ansprüche, **dadurch gekennzeichnet, dass** Kühlgranulat (7) mit mindestens zwei Arten von Granulatkörpern verwendet wird, wovon eine aus einem Schweißhilfsstoff besteht.

10. Verfahren nach einem der vorstehenden Ansprüche, **dadurch gekennzeichnet, dass** Kühlgranulat (7) mit Granulatkörpern unterschiedlicher Korngrößen und/oder unterschiedlicher geometrischer Formen verwendet wird.

11. Anlage zur additiven Fertigung metallischer Formkörper (1) durch Abscheiden eines schmelzbaren blech- oder drahtförmigen Ausgangswerkstoffes (4) in einzelnen, jeweils aufeinanderfolgenden Schichten gemäß des Verfahrens nach einem der vorstehenden Ansprüche, aufweisend einen kasten- oder wannenförmigen Bauraum (2) und eine darin angeordnete Druckplattform (3), **dadurch gekennzeichnet, dass** die Anlage eine Zuführung (9) zum Einfüllen von festem, schüttbarem Kühlgranulat (7) in den Bauraum (2) und eine mit wenigstens der Bodenplatte des Bauraumes (2) verbundene Rütteleinrichtung (11) umfasst, wobei die Druckplattform (3) mittels eines oder mehrerer Entkopplungs-Elemente (6) von der Rütteleinrichtung (11) entkoppelt ist.

12. Anlage nach Anspruch 11, **dadurch gekennzeichnet, dass** sie eine Wärmeübertragungsfluid-Zuführungseinrichtung (13) mit Durchflussreglern und Düsen (14) umfasst, mittels welcher das Kühlgranulat (7) mit Wärmeübertragungsfluid (8) beaufschlagbar ist, wobei für jede Düse (14) ein durch sie strömender Fluidmassestrom jeweils mittels eines Masseflussreglers separat steuerbar ist.

13. Anlage nach Anspruch 12, **dadurch gekennzeichnet, dass** jede der Düsen (14) mittels eines Umschaltventils und/oder Mischers jeweils mit einer Zuleitung für Schutzgas und einer Zuleitung für flüssiges Wärmeübertragungsfluid (8) verbunden ist.

## Claims

1. A method for the additive manufacturing of metallic shaped bodies by means of application welding with use of a laser or an electric arc, shaping welding or US welding, wherein a shaped body (1) is produced in an installation space (2) by melting at least one sheet-like or wire-like starting material (4) by supplying energy, said starting material being fed by means of a material feed device, and by depositing the molten starting material (4) in individual successive layers,
**characterised in that**
the process heat created during the deposition is dissipated by means of a pourable cooling granular material (7) at least partially surrounding and contacting the already finished parts of the shaped body (1).

2. The method according to claim 1, **characterised in that** the process heat absorbed by the cooling granular material (7) is dissipated by means of a heat transfer fluid (8) interacting thermally with the cooling granular material (7).

3. The method according to claim 2, **characterised in that** the heat transfer fluid (8) is temperature-controlled prior to being introduced into the installation space (2).

4. The method according to either one of claims 2 or 3, **characterised in that** the heat transfer fluid (9) flows through the cooling granular material (7) during the manufacturing process.

5. The method according to any one of the preceding claims, **characterised in that** the cooling granular material (7) disposed in the installation space (2) is exchanged continuously or at predefined time intervals.

6. The method according to any one of the preceding claims, **characterised in that** cooling granular material (7) comprising granule bodies with a granule body core formed from phase-change material and a granule body casing formed from a metallic or ceramic material having a thermal conductivity of at least 10 W m⁻¹ K⁻¹ is used.

7. The method according to any one of claims 2 to 6, **characterised in that** gaseous heat transfer fluid (8) is used, wherein this is introduced into the installation space (2) in the lower region thereof and flows through the cooling granular material (7) from bottom to top.

8. The method according to any one of claims 2 to 6, **characterised in that** gases flowing through the cooling granular material (7) are suctioned in the lower region of the installation space (2).

9. The method according to any one of the preceding claims, **characterised in that** cooling granular material (7) comprising at least two granule body types, one of which consists of a welding consumable, is used.

10. The method according to any one of the preceding claims, **characterised in that** cooling granular material (7) comprising granule bodies of different grain sizes and/or different geometric shapes is used.

11. A facility for the additive manufacturing of metallic shaped bodies (1) by deposition of a meltable sheet-like or wire-like starting material (4) in individual successive layers in accordance with the method according to any one of the preceding claims, comprising a box-shaped or trough-shaped installation space (2) and a printing platform (3) arranged therein, **characterised in that** the facility comprises a feed (9) for filling solid, pourable cooling granular material (7) into the installation space (2) and a shaking device (11) connected to at least the baseplate of the installation space (2), wherein the printing platform (3) is decoupled from the shaking device (11) by means of one or more decoupling elements (6).

12. The facility according to claim 11, **characterised in that** it comprises a heat transfer fluid feed device (13) with flowmeters and nozzles (14), by means of which the cooling granular material (7) can be acted on by heat transfer fluid (8), wherein for each nozzle (14) a fluid mass flow flowing therethrough is controllable separately in each case by means of a mass flowmeter.

13. The facility according to claim 12, **characterised in that** each of the nozzles (14) is connected by means of a changeover valve and/or mixer to a feed line for inert gas and a feed line for liquid heat transfer fluid (8).

## Revendications

1. Procédé de fabrication additive de corps moulés métalliques au moyen d'un soudage avec apport de matière moyennant l'utilisation d'un laser ou d'un arc électrique, d'un soudage de façonnage ou d'un soudage par ultrasons, où, dans un espace de construction (2), un corps moulé (1) est fabriqué par fusion d'un matériau de départ (4) en forme de tôle ou de fil fourni au moyen d'un dispositif d'apport de matière pour former des couches individuelles successives au moyen d'un apport d'énergie et d'un dépôt du matériau de départ (4) sous forme fondue,
**caractérisé en ce que**
pendant le dépôt, la chaleur de procédé créée est évacuée au moyen de granulés de refroidissement (7) pouvant être déversés, entourant au moins partiellement et étant en contact avec les parties du corps moulé (1) déjà fabriquées.

2. Procédé selon la revendication 1, **caractérisé en ce que** la chaleur de procédé absorbée par les granulés de refroidissement (7) est évacuée au moyen d'un fluide caloporteur (8) étant en place pour l'échange thermique avec les granulés de refroidissement (7).

3. Procédé selon la revendication 2, **caractérisé en ce que** le fluide caloporteur (8) est thermostaté avant l'introduction dans l'espace de construction (2).

4. Procédé selon l'une des revendications 2 ou 3, **caractérisé en ce que** les granulés de refroidissement (7) sont traversés par le fluide caloporteur (8) pendant la fabrication.

5. Procédé selon l'une des revendications précédentes, **caractérisé en ce que** les granulés de refroidissement (7) se trouvant dans l'espace de construction (2) sont échangés continuellement ou à des intervalles de temps prédéfinis.

6. Procédé selon l'une des revendications précédentes, **caractérisé en ce que** des granulés de refroidissement (7) avec des corps de granulés dotés de parties centrales de corps de granulé à base d'une matière à changement de phase et d'enveloppes de corps de granulés à base d'une matière métallique ou céramique avec une conductibilité thermique d'au moins 10 W m⁻¹ K⁻¹ sont employés.

7. Procédé selon l'une des revendications 2 à 6, **caractérisé en ce qu'**un fluide caloporteur (8) sous forme de gaz est employé, celui-ci étant alimenté dans la zone inférieure de l'espace de construction (2) de celui-ci et traversant les granulés de refroidissement (7) du bas vers le haut.

8. Procédé selon l'une des revendications précédentes 2 à 6, **caractérisé en ce que**, dans la zone inférieure de l'espace de construction (2), il se produit une aspiration des gaz traversant les granulés de refroidissement (7).

9. Procédé selon l'une des revendications précédentes, **caractérisé en ce que** des granulés de refroidissement (7) avec au moins deux types de corps de granulés sont employés, parmi lesquels l'un est constitué d'une matière auxiliaire pour le soudage.

10. Procédé selon l'une des revendications précédentes, **caractérisé en ce que** des granulés de refroidissement (7) avec des corps de granulés de taille de grains diverses et/ou des formes géométriques différentes sont employés.

11. Installation pour la fabrication additive de corps moulés (1) métalliques par dépôt d'un matériau de départ (4) fusible en forme de tôle ou de fil pour former des couches individuelles, respectivement successives selon l'une des revendications précédentes, présentant un espace de construction (2) en forme de boîte ou de bac et une plateforme d'impression (3) y étant disposée, **caractérisée en ce que** l'installation comprend un système d'alimentation (9) pour le remplissage par des granulés de refroidissement (7) solides, pouvant être déversés dans l'espace de construction (2) et un dispositif vibrant (11) relié au moins avec la plaque de fond de l'espace de construction (2), où la plateforme d'impression (3) est désaccouplée du dispositif vibrant 11) au moyen d'un ou de plusieurs élément de désaccouplement (6).

12. Installation selon la revendication 11, **caractérisée en ce qu'**elle comprend un dispositif d'alimentation de fluide caloporteur (13) doté de régulateurs de flux d'écoulement et de buses (14) au moyen desquels les granulés de refroidissement (7) peuvent être chargés de fluide caloporteur (8), où, pour chaque buse (14), un flux massique de fluide traversant peut être commandé séparément au moyen d'un régulateur de flux massique respectif.

13. Installation selon la revendication 12, **caractérisée en ce que** chacune des buses (14) est reliée respectivement avec une conduite d'alimentation pour du gaz de protection et une conduite d'alimentation pour du fluide caloporteur (8) liquide au moyen d'une soupape d'inversion et/ou d'un mélangeur.
